# EUROPEAN PATENT APPLICATION

(11) **EP 4 287 325 A1**
(43) Date of publication of application: **06.12.2023**
(21) Application number: 23743454.3
(22) Date of filing: 18.01.2023
(51) Int. Cl.: H01M 4/62, H01M 4/13, H01M 4/04, H01M 4/36, H01M 10/052, H01M 4/02

(54) **BINDER COMPOSITION FOR MANUFACTURING LITHIUM SECONDARY BATTERY CATHODE, AND LITHIUM SECONDARY BATTERY CATHODE MANUFACTURED THEREBY**

(30) Priority: 20.01.2022 KR 20220008331; 17.01.2023 KR 20230006616
(71) Applicant: LG Energy Solution, Ltd., Seoul 07335 (KR)
(72) Inventor: JUNG, Unho, Daejeon 34122 (KR); LEE, Choonghyeon, Daejeon 34122 (KR)
(74) Representative: Goddar, Heinz J.
(86) International application number: PCT/KR2023/000851
(87) International publication number: WO 2023/140607

(57) **Abstract**

A binder composition for manufacturing a positive electrode of a lithium secondary battery comprising a binder, a thickener and an Arabic gum-cysteine polymer is provided, a positive electrode manufactured using the binder composition is provided, and a lithium secondary battery comprising the positive electrode is provided. The binder composition comprises an Arabic gum-cysteine polymer, and thus when applied to a lithium secondary battery, can improve the initial discharging performance and lifetime characteristics of the battery.

## Description

### [Technical Field]

This application claims the benefits of priorities based on Korean Patent Application No. 10-2022-0008331 filed on January 20, 2022 and Korean Patent Application No. 10-2023-0006616 filed on January 17, 2023, the entire contents of which are incorporated as a part of this specification.

The present invention relates to a binder composition for manufacturing a positive electrode of a lithium secondary battery, and a positive electrode of a lithium secondary battery manufactured thereby.

### [Background Art]

Due to the need for development of eco-friendly electric and hybrid vehicles and the rapid development of smart IT devices, demands for batteries having high capacity and high output are rapidly increasing. Since currently commercialized lithium-ion batteries are used only with limited energy density due to technical problems, the development of a lithium-sulfur battery, a lithium-selenium battery or a lithium-air battery with a higher energy density is attracting attention. Sulfur and oxygen, which are the positive electrode active materials in the lithium-sulfur battery and the lithium-air battery among them, have similar physical and chemical properties, and are further raising expectations for commercialization due to abundant resource reserves.

In a lithium-air battery or a lithium-sulfur battery that uses lithium metal with high reducing power, voltage characteristics, and high reversibility as a negative electrode and air or sulfur as a positive electrode, since the amount of lithium ions per weight and per volume stored in the reaction products, Li₂O₂, LiOH and Li₂S is much higher than that of LiCoO₂ used as a positive electrode of a lithium-ion battery, and more charge can be stored by using lithium metal as a negative electrode, as compared to a lithium-ion battery using a graphite-based negative electrode with a maximum Li storage limit of LiCe, the theoretical energy density is much higher than that of a lithium-ion battery. However, despite such a high theoretical energy density, since the actual energy density is as low as 20 to 45% of the theoretical value, the lithium-air battery and the lithium-sulfur battery have not yet been commercialized and are in the early stages of development.

Specifically, in the case of the lithium-air battery, a high overvoltage is required to decompose Li₂O₂ and Li₂O generated during charging into lithium ion (Li⁺) and oxygen (O₂), and unlike the lithium-ion battery, it has an open structure that allows outside air to flow in and out, and thus due to the inflow of impurities (moisture and carbon dioxide, etc.) from the outside air, side reactions and volatilization of electrolytes are likely to occur, thereby resulting in a rapid deterioration in performance.

In the case of the lithium-sulfur battery, sulfur forming the positive electrode, and Li₂S, which is the final product of the reaction, have the characteristic of being an electrical insulator. Accordingly, in the lithium-sulfur battery, a tetraethylenegylcol dimethylether (TEGDME) type electrolyte with a strong dielectric constant is used. Due to this, as the soluble polysulfide moves from the positive electrode to the negative electrode, a shuttle mechanism occurs in which it is reduced to lower monomeric polysulfides, which return to the positive electrode, and back to the negative electrode. As a result, insoluble Li₂S and Li₂S₂ may accumulate at the interface between the surface of the negative electrode and the separator. In addition, in the positive electrode, lithium polysulfide (Li₂S₈), which is an intermediate product of the reaction, has high solubility in the organic electrolyte and is continuously melted during the discharging reaction, thereby reducing the amount of the positive electrode material, and thus causing a rapid decrease in capacity according to the cycle. In addition, since sulfur itself has very low electrical conductivity, it is used together with electrically conductive carbon or polymer, but in this case, the overall energy density of the cell is lowered due to the decrease in the content of sulfur.

In order to solve these problems, various methods such as designing a porous positive electrode structure, developing an additive for preventing overvoltage, or forming a surface treatment layer are being researched and developed. Among them, from the viewpoint of development of a positive electrode, in the case of the lithium-air battery, a method of reducing charging overvoltage by ensuring that Li₂O₂, which is a discharging product, is uniformly dispersed and distributed inside a dense conductive matrix without clumping, thereby maximizing the rate of generation of lithium ions and oxygen during charging, along with smooth electron transfer, is being reviewed. Also, in the case of the lithium-sulfur battery, by ensuring that Li₂S, which is an insulator, is uniformly dispersed and distributed in a dense conductive matrix through structural/compositional optimal design, a method of reducing charging overvoltage by facilitating the transfer of electrons and lithium ions and at the same time suppressing leaching of lithium polysulfide at the positive electrode is being reviewed.

When manufacturing the positive electrode of the lithium-sulfur battery, a binder and a thickener are used to stabilize the slurry and bind the electrode elements. However, if only the existing binder and thickener for a lithium-ion battery are used, effects such as increase in reactivity or increase in lifetime through the control of leaching of lithium polysulfide generated in the lithium-sulfur battery cannot be expected. Through the addition of a material with a specific functional group that can control the leaching of the lithium polysulfide generated from the positive electrode as the charging/discharging is progressed, changes in reactivity can be attempted, but since the specific material is dispersed in the slurry, the rheological properties are rather changed, and thus the physical properties of the electrode may be deteriorated during coating and drying.

Accordingly, there is a need for research on a binder composition that can solve the above problems.

### [Prior Art Document]

### [Patent Document]

Korean Laid-open Patent Publication No. 10-2002-0092029

### [Disclosure]

### [Technical Problem]

Accordingly, the inventors of the present invention have conducted various studies to solve the above problems, and as a result, have confirmed that the initial discharging capacity and lifetime characteristics of the lithium-sulfur battery can be improved by adding the Arabic gum-cysteine polymer to the binder composition used for manufacturing the positive electrode of the lithium secondary battery, preferably the lithium-sulfur battery, and thus have completed the present invention.

Therefore, it is an object of the present invention to provide a binder composition for manufacturing a positive electrode of a lithium secondary battery capable of improving initial discharging capacity and lifetime characteristics of the lithium-sulfur battery.

In addition, it is another object of the present invention to provide a positive electrode comprising the binder composition and a lithium secondary battery comprising the same.

### [Technical Solution]

In order to achieve the above objects,
the present invention provides a binder composition for manufacturing a positive electrode of a lithium secondary battery comprising a binder, a thickener, and an Arabic gum-cysteine polymer.

In addition, the present invention provides a positive electrode for a lithium secondary battery including a current collector; and a positive electrode active material layer disposed on at least one surface of the current collector,
wherein the positive electrode active material layer includes the binder composition of the present invention, a positive electrode active material and a conductive material.

In addition, the present invention provides a lithium secondary battery comprising the positive electrode of the present invention; a negative electrode; a separator interposed between the positive electrode and the negative electrode; and an electrolyte.

### [Advantageous Effects]

As the binder composition for manufacturing a positive electrode of a lithium secondary battery of the present invention comprises an Arabic gum-cysteine polymer, when applied to a lithium secondary battery, preferably a lithium-sulfur battery, the effect of improving the initial discharging capacity and lifetime characteristics of the battery can be obtained.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" comprise plural referents unless the context clearly dictates otherwise. It is to be understood that the terms such as "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

The term "polysulfide" as used herein is a concept comprising both "polysulfide ions (Sₓ²⁻, x = 1∼8)" and "lithium polysulfides (Li₂Sₓ or LiSₓ⁻, x = 1~8)."

### Binder composition for manufacturing positive electrode of lithium secondary battery

The present invention relates to a binder composition for manufacturing a positive electrode of a lithium secondary battery comprising a binder, a thickener and an Arabic gum-cysteine polymer.

Conventional binders and thickeners could not secure functionality such as controlling the leaching of the lithium polysulfide generated in a lithium secondary battery, preferably a lithium-sulfur battery, but the binder composition of the present invention comprises an Arabic gum-cysteine polymer, and thus it can adsorb lithium polysulfide and control the leaching thereof. Accordingly, the reactivity of the positive electrode of the lithium-sulfur battery comprising this can be increased, and the initial discharging capacity and lifetime characteristics of the lithium-sulfur battery including the above-described positive electrode can be improved.

Arabic gum has a structure represented by Formula 1 below.

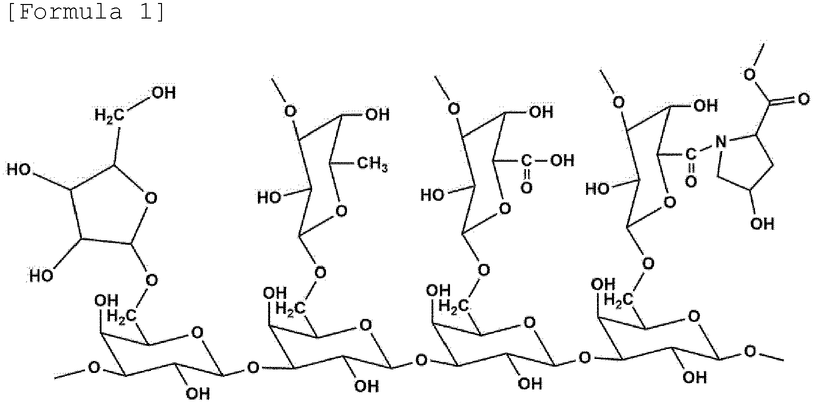

In addition, cysteine has a structure of Formula 2 below.

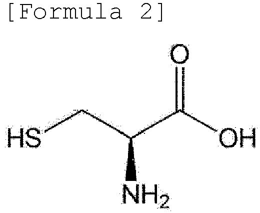

The Arabic gum-cysteine polymer is obtained by (graft) polymerizing Arabic gum and cysteine, and may have a structure represented by Formula 3 below.

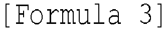

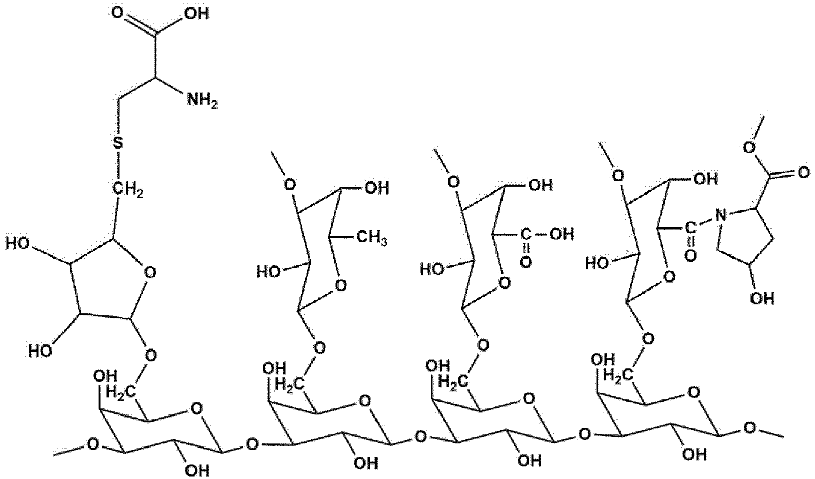

The polymerization method is not particularly limited as long as it is used in the art.

The Arabic gum can obtain a stable emulsion in a relatively wide pH range. The Arabic gum-cysteine polymer obtained by polymerizing the Arabic gum and cysteine can control the leaching of lithium polysulfide by adsorbing lithium polysulfide generated at the positive electrode of a lithium-sulfur battery, due to the structural characteristics of Arabic gum and the carboxyl group (-COOH) and amine group (-NH₂) of cysteine. Therefore, when a binder composition containing this is used in the manufacture of a positive electrode of a lithium secondary battery, preferably a positive electrode of a lithium-sulfur battery, it is possible to increase the reactivity of the positive electrode while maintaining the physical properties of the slurry of the positive electrode active material layer. As a result, the initial discharging capacity and lifetime characteristics of the lithium-sulfur battery comprising the positive electrode can be improved.

The Arabic gum-cysteine polymer may contain Arabic gum in an amount of 95 to 99.9% by weight and cysteine in an amount of 0.1 to 5% by weight based on the total weight of the polymer. Also, preferably, Arabic gum may be contained in an amount of 99 to 99.9% by weight, and cysteine may be contained in an amount of 0.1 to 1% by weight.

If the amount of Arabic gum is less than 95% by weight or the amount of cysteine exceeds 5% by weight, it may be difficult to express the structural characteristics of the Arabic gum, and it may be difficult to maintain the slurry properties of the positive electrode active material layer. If the amount of the Arabic gum exceeds 99.9% by weight or the amount of cysteine is less than 0.1% by weight, the adsorption effect of the lithium polysulfide may be insignificant due to the low content of cysteine.

In addition, the Arabic gum-cysteine polymer may be contained in an amount of 10 to 65% by weight, preferably 15 to 60% by weight, and most preferably 15 to 30% by weight based on the total weight of the binder composition. If the Arabic gum-cysteine polymer is contained in an amount of less than 10% by weight, it is difficult to obtain an effect such as controlling the leaching of the lithium polysulfide. If the Arabic gum-cysteine polymer is contained in an amount of exceeding 65% by weight, overvoltage may occur during initial discharging of a lithium-sulfur battery to which it is applied.

If the Arabic gum-cysteine polymer is used as a binder in the binder composition, since the adhesive force is very low, it is impossible to form a positive electrode active material layer comprising the binder composition on the current collector, thereby making it impossible to manufacture a positive electrode.

The binder is a material used to improve the adhesive force between components of the positive electrode and the adhesive force between the positive electrode active material and the positive electrode current collector, and is not particularly limited as long as it is generally used in the related art.

An emulsion-type binder may be used so that the binder may be uniformly dispersed in the slurry for preparing the positive electrode. The emulsion-type binder may be selected from the group consisting of, for example, poly(vinylidene fluoride) (PVDF), vinylidene fluoride-hexafluoropropylene copolymer (PVDF-co-HFP), polyvinyl alcohol, polyacrylonitrile, starch, hydroxypropyl cellulose, regenerated cellulose, polyvinyl pyrrolidone, polytetrafluoroethylene, polyethylene, polypropylene, polybutyl acrylate, polypropyl acrylate, polyethyl acrylate, polyethylhexyl acrylate, polystyrene, ethylene-propylene-diene polymer (EPDM), sulfonated-EPDM, styrene-butadiene rubber (SBR), fluorine rubber, a mixture containing two or more thereof, and a copolymer of two or more of thereof. Here, the copolymer includes not only a block copolymer in which each polymer is bonded, but also a random copolymer in which monomers of each polymer are mixed and bonded. For example, in the present specification, a copolymer of polyethylene and polypropylene is interpreted as a concept including an ethylene-propylene copolymer.

The binder may be contained in an amount of 20 to 60% by weight, preferably 25 to 60% by weight, and most preferably 40 to 60% by weight, based on the total weight of the binder composition. If the binder is contained in an amount of less than 20% by weight, the adhesive force between the components of the positive electrode and the adhesive force between the positive electrode active material and the positive electrode current collector are reduced. If the binder is contained in an amount of exceeding 60% by weight, the effect of improving performance according to the addition of the thickener and the Arabic gum-cysteine polymer cannot be expected.

The thickener is basically used to adjust the viscosity, and a material suitable for use with the binder and the Arabic gum-cysteine polymer can be selected as the thickener, in terms of the physical properties of the slurry for producing the positive electrode and furthermore, the physical properties of the lithium-sulfur battery. The thickener may be a cellulose-based polymer, and the cellulose-based polymer may be at least one or more selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC) and cellulose gum. The thickener may be in a lithiated form, and in the present invention, carboxymethyl cellulose may be preferably used as the thickener, and the cellulose-based polymer may be in a lithiated form. Since the cellulose-based polymer contains a functional group such as a hydroxyl group or a carboxy group, it is possible to lithiate by replacing hydrogen of the functional group with lithium, and in the case of lithiation of a cellulose-based polymer, an additional lithium source can be secured, which helps improve the performance of a lithium-sulfur battery.

The thickener may be contained in an amount of 15 to 35% by weight, preferably 15 to 30% by weight, based on the total weight of the binder composition. If the thickener is contained in an amount of less than 15% by weight, the viscosity of the slurry for preparing the positive electrode is low, thereby making it difficult to uniformly disperse the components of the positive electrode and secure functionality through it. If the thickener is contained in an amount of exceeding 35% by weight, the fluidity of the slurry for preparing the positive electrode is lowered, thereby making it difficult to uniformly disperse the components of the positive electrode and secure functionality through it.

### Positive electrode for lithium secondary battery

The present invention relates to a positive electrode for a lithium secondary battery comprising a current collector; and a positive electrode active material layer disposed on at least one surface of the current collector,
wherein the positive electrode active material layer includes the above-described binder composition of the present invention, a positive electrode active material, and a conductive material.

In the positive electrode active material layer, the binder composition can be adjusted in a direction that can maximize the performance of the battery based on the basic functionality of bonding the components of the positive electrode.

The binder composition may be contained in an amount of 3 to 20% by weight, preferably 3 to 15% by weight, and most preferably 3 to 10% by weight, based on a total weight of 100 % by weight of base solids contained in the positive electrode active material layer. Here, the base solids refer to solid components of the positive electrode active material, the conductive material, and the binder composition excluding the solvent in the slurry composition for the positive electrode used when manufacturing the positive electrode active material layer. As the functionality is supplemented through the thickener and the Arabic gum-cysteine polymer, even when a small amount of the binder composition is used, improved effects in terms of adhesive properties and the performance of the battery can be expected. If the binder composition is contained in an amount of exceeding 20% by weight, the content of the positive electrode active material is relatively reduced, which is not preferable in terms of improving the performance of the battery.

In addition, the Arabic gum-cysteine polymer contained in the binder composition may be contained in an amount of 0.5% by weight or more and less than 10% by weight, preferably 1 to 5% by weight, based on a total weight of 100 % by weight of base solids contained in the positive electrode active material layer. If the Arabic gum-cysteine polymer is contained in an amount of less than 0.5% by weight, the adsorption effect of the lithium polysulfide is insignificant, and thus an improvement in the reactivity of the positive electrode cannot be expected. If the Arabic gum-cysteine polymer is contained in an amount of 10% by weight or more, the content of the positive electrode active material is relatively reduced, and overvoltage may occur during initial discharging of a lithium-sulfur battery comprising the same.

The positive electrode active material may comprise at least one selected from the group consisting of elemental sulfur (S₈), Li₂Sₙ (n ≥ 1, n is an integer), organic sulfur compound and carbon-sulfur polymer [(C₂Sₓ)ₙ, 2.5 ≤ x ≤ 50, n ≥ 2, x and n are integers] and sulfur-carbon composite, and preferably may be a sulfur-carbon composite.

The sulfur-carbon composite may comprise a porous carbon material and sulfur contained in at least a portion of inner and outer surfaces of the porous carbon material.

The sulfur-carbon composite comprises a porous carbon material which not only provides a framework capable of uniformly and stably immobilizing sulfur described above and but also compensates for the low electrical conductivity of sulfur so that the electrochemical reaction can proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porous carbon material. If the average diameter of the pores is less than the above range, the pore size is only at the molecular level and impregnation with sulfur is impossible. On the contrary, if the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium secondary battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); graphite such as natural graphite, artificial graphite, and expanded graphite, and activated carbon. Preferably, the porous carbon material may be carbon nanotubes.

The sulfur in the sulfur-carbon composite according to the present invention is located on at least one of the inner and outer surfaces of the porous carbon material, and for example, may be present in an area of less than 100%, preferably 1 to 95%, and more preferably 40 to 96% of the entire inner and outer surfaces of the porous carbon material. When sulfur is present on the inner and outer surfaces of the porous carbon material within the above range, it can show the greatest effect in terms of the electron transfer area and the wettability with the electrolyte. Specifically, since sulfur is thinly and evenly impregnated on the inner and outer surfaces of the porous carbon material in the above range, the electron transfer contact area may be increased during the charging/discharging process. If sulfur is located at the area of 100% of the entire inner and outer surface of the porous carbon material, since the porous carbon material is completely covered with sulfur, the wettability to the electrolyte is deteriorated and the contact property is deteriorated, and thus the porous carbon material cannot receive electrons and cannot participate in the electrochemical reaction.

The sulfur-carbon composite may contain 65 to 90 parts by weight, preferably 70 to 85 parts by weight, and more preferably 72 to 80 parts by weight of sulfur, based on 100 parts by weight of the sulfur-carbon composite. If the content of sulfur is less than the above-described range, as the content of the porous carbon material in the sulfur-carbon composite is relatively increased, the specific surface area is increased, so that the content of the binder is increased during the manufacture of the positive electrode. The increase in the amount of the binder used may eventually increase the sheet resistance of the positive electrode and act as an insulator to prevent electron pass, thereby deteriorating the performance of the battery. On the contrary, if the content of sulfur exceeds the above range, sulfur that cannot be combined with the porous carbon material agglomerates between them or re-leaches to the surface of the porous carbon material, and thus becomes difficult to receive electrons and cannot participate in electrochemical reactions, resulting in loss of the capacity of the battery.

The method for preparing the sulfur-carbon composite of the present invention is not particularly limited in the present invention, and a method commonly used in the art may be used. For example, a method of simply mixing sulfur and the porous carbon material and then heat-treating them to form a composite may be used.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group IIIA element may comprise Al, Ga, In, Tl and the like, and the group IVA element may comprise Ge, Sn, Pb, and the like.

In the positive electrode for the lithium secondary battery of the present invention, the positive electrode active material may be contained in an amount of 50 to 95% by weight, preferably 70 to 95% by weight, and more preferably 85 to 95% by weight, based on a total weight of 100 % by weight of base solids contained in the positive electrode active material layer. If the content of the positive electrode active material is less than the above range, it is difficult for the electrode to sufficiently exert an electrochemical reaction. On the contrary, if the content exceeds the above range, there is a problem that the physical properties of the electrode to be described later are lowered.

The conductive material is a material that acts as a path, through which electrons are transferred from the current collector to the positive electrode active material, by electrically connecting the electrolyte and the positive electrode active material. The conductive material can be used without limitation as long as it has electrical conductivity.

For example, as the conductive material, carbon black, such as Super-P, Denka black, acetylene black, Ketjen black, channel black, furnace black, lamp black, thermal black and carbon black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The content of the conductive material may be 1 to 10% by weight, based on 100% by weight of the total weight of the base solids contained in the positive electrode active material layer. If the content of the conductive material is less than the above range, it is difficult to transfer electrons between the positive electrode active material and the current collector, thereby reducing voltage and capacity. On the contrary, if the content of the conductive material exceeds the above range, the proportion of the positive electrode active material may be reduced, so that the total energy (charge amount) of the battery may be reduced. Therefore, it is preferable that the content of the conductive material is determined to be an appropriate content within the above-described range.

The positive electrode current collector supports the positive electrode active material and is not particularly limited as long as it has high conductivity without causing chemical changes in the relevant battery. For example, copper, stainless steel, aluminum, nickel, titanium, palladium, sintered carbon; copper or stainless-steel surface-treated with carbon, nickel, silver or the like; aluminum-cadmium alloy or the like may be used as the positive electrode current collector.

The positive electrode current collector can enhance the bonding strength with the positive electrode active material by having fine irregularities on its surface, and may be formed in various forms such as film, sheet, foil, mesh, net, porous body, foam, and nonwoven fabric.

In the present invention, the method of manufacturing the positive electrode for the lithium secondary battery is not particularly limited, and a method known to a person skilled in the art or various methods modified therefrom may be used.

As an example, the positive electrode for the lithium-sulfur battery may be prepared by preparing a slurry composition for a positive electrode comprising the above-described components, and then applying it to at least one surface of the positive electrode current collector to form a positive electrode active material layer.

The slurry composition for the positive electrode comprises a positive electrode active material, a binder composition, and a conductive material constituting the above-described positive electrode active material layer, and may further comprise other additives and solvents.

As the solvent, one capable of uniformly dispersing a positive electrode active material, a binder composition and a conductive material is used. Such a solvent is an aqueous solvent, and water is most preferred, and in this case, water may be distilled water or de-ionized water. However, it is not necessarily limited thereto, and if necessary, a lower alcohol that can be easily mixed with water may be used. Examples of the lower alcohol comprise methanol, ethanol, propanol, isopropanol, and butanol, and preferably, they may be used in combination with water.

The content of the solvent may be contained at a level having a concentration that allows easy coating, and the specific content varies depending on the application method and apparatus.

The slurry composition for a positive electrode may additionally contain, if necessary, materials commonly used for the purpose of improving its function in the relevant technical field as necessary. For example, a viscosity modifier, a fluidizing agent, a filler, etc. are mentioned.

The method of applying the slurry composition for a positive electrode is not particularly limited in the present invention, and for example, methods such as a doctor blade method, a die casting method, a comma coating method, and a screenprinting method can be used. In addition, after being molded on a separate substrate, the slurry for the positive electrode may be applied on the positive electrode current collector by a pressing or lamination method.

After the application, a drying process for removing the solvent may be performed. The drying process is performed at a temperature and time at a level capable of sufficiently removing the solvent, and the conditions may vary depending on the type of the solvent, and thus are not particularly limited in the present invention. Examples of the drying method may comprise a drying method by warm air, hot air, or low-humidity air, a vacuum drying method, and a drying method by irradiation with (far)-infrared radiation or electron beam. The drying rate is usually adjusted so that the solvent can be removed as quickly as possible within a speed range that does not cause cracks in the positive electrode active material layer due to the concentration of stress and does not delaminate the positive electrode active material layer from the positive electrode current collector.

Additionally, the density of the positive electrode active material in the positive electrode may be increased by pressing the current collector after drying. Methods, such as a mold press and a roll press, are mentioned as a press method.

The porosity of the positive electrode, specifically, the positive electrode active material layer prepared by the above-described composition and manufacturing method may be 50 to 80%, preferably 60 to 75%. If the porosity of the positive electrode is less than 50%, since the degree of filling of the slurry composition for the positive electrode comprising a positive electrode active material, an additive, a conductive material, and a binder becomes too high, there are problems that sufficient electrolyte to exhibit ion conduction and/or electrical conduction between positive electrode active materials cannot be maintained, and thus output characteristics or cycle characteristics of the battery may be deteriorated, the overvoltage and the reduction in discharging capacity of the battery become serious. On the contrary, if the porosity of the positive electrode exceeds 80% and has an excessively high porosity, there is a problem that the physical and electrical connection with the current collector is lowered and thus adhesion is lowered and the reaction becomes difficult, and there is a problem that the electrolyte may be filled in the internal pores of the positive electrode, thereby reducing the energy density of the battery. Therefore, the porosity of the positive electrode is appropriately adjusted within the above range.

### lithium secondary battery

In addition, the present invention relates to a lithium secondary battery comprising the positive electrode as described above according to the present invention; a negative electrode; a separator interposed between the positive electrode and the negative electrode; and an electrolyte.

The lithium secondary battery of the present invention may preferably be a lithium-sulfur battery.

The negative electrode may comprise a negative electrode current collector and a negative electrode active material layer applied to one or both surfaces of the negative electrode current collector. Alternatively, the negative electrode may be a lithium metal plate.

The negative electrode current collector is for support of the negative electrode active material layer, and is as described in the positive electrode current collector.

The negative electrode active material layer may comprise a conductive material, a binder, etc. in addition to the negative electrode active material. At this time, the conductive material and the binder are as described above.

The negative electrode active material may comprise a material capable of reversibly intercalating or de-intercalating lithium ion (Li⁺), a material capable of reacting with lithium ion to reversibly form lithium containing compounds, lithium metal, or lithium alloy.

The material capable of reversibly intercalating or de-intercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

A separator may be interposed between the positive electrode and the negative electrode.

The separator separates or insulates the positive electrode and the negative electrode from each other and enables lithium ions to be transported between the positive electrode and the negative electrode, and may be made of a porous nonconductive or insulating material. The separator may be used without a particular limitation as long as it is used as a separator in a typical lithium secondary battery. The separator may be an independent member such as a film or a coating layer added to the positive electrode and/or the negative electrode.

As the separator, a separator with excellent impregnating ability for the electrolyte along with low resistance to ion migration in the electrolyte is preferable.

The separator may be made of a porous substrate. Any of the porous substrates can be used as long as it is a porous substrate commonly used in a secondary battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 µm, preferably 5 to 50 µm. Although the thickness range of the porous substrate is not particularly limited to the above-mentioned range, if the thickness is excessively thinner than the lower limit described above, mechanical properties are deteriorated and thus the separator may be easily damaged during use of the battery.

The average size and porosity of the pores present in the porous substrate are also not particularly limited, but may be 0.001 gm to 50 gm and 10 to 95%, respectively.

The electrolyte contains lithium ions, and is to cause an electrochemical oxidation or reduction reaction at the positive electrode and the negative electrode through them.

The electrolyte may be a non-aqueous electrolyte or a solid electrolyte that does not react with lithium metal, but is preferably a non-aqueous electrolyte, and comprises an electrolyte salt and an organic solvent.

The electrolyte salt contained in the non-aqueous electrolyte is a lithium salt. The lithium salt may be used without limitation as long as it is commonly used in an electrolyte for a lithium secondary battery. For example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, LiN(SO₂F)₂, lithium chloroborane, lithium lower aliphatic carboxylate, lithium tetraphenyl borate, lithium imide and the like can be used.

The concentration of the lithium salt may be 0.2 to 2 M, specifically 0.4 to 2 M, and more specifically 0.4 to 1.7 M depending on various factors such as the exact composition of the electrolyte solvent mixture, the solubility of the salt, the conductivity of dissolved salts, the charging and discharging conditions of the battery, the operating temperature, and other factors known in the field of the lithium battery. If the concentration of the lithium salt is less than 0.2 M, the conductivity of the electrolyte may be lowered and thus the performance of the electrolyte may be deteriorated. If the concentration of the lithium salt exceeds 2 M, the viscosity of the electrolyte may increase and thus the mobility of the lithium ions may be reduced.

As the organic solvent comprised in the non-aqueous electrolyte, those commonly used in an electrolyte for a lithium secondary battery may be used without limitation. For example, as the organic solvent, ethers, esters, amides, linear carbonates, cyclic carbonates, etc. may be used alone or in a mixture of two or more thereof. Among them, an ether-based compound may be typically used.

The ether-based compound may comprise an acyclic ether and a cyclic ether.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

For example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

The ester in the organic solvent may be, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and a mixture of two or more thereof.

Specific examples of the linear carbonate compound may representatively comprise, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may comprise at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides include, but are not limited to, fluoroethylene carbonate (FEC) and the like.

The electrolyte may further comprise a nitric acid or nitrous acid-based compound as an additive in addition to the electrolyte salt and the organic solvent described above. The nitric acid or nitrous acid-based compounds have an effect of forming a stable film on the lithium metal electrode as a negative electrode and improving the charging/discharging efficiency.

The nitric acid or nitrous acid-based compounds are not particularly limited in the present invention, and may be at least one selected from the group consisting of inorganic nitric acid or nitrous acid-based compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid-based compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and the combinations thereof. Preferably, lithium nitrate may be used.

The injection of the electrolyte can be performed at an appropriate stage of the manufacturing process of the electrochemical device depending on the manufacturing process and required properties of the final product. That is, it can be applied before assembling the electrochemical device or in the final stage of assembling the electrochemical device.

In the case of the lithium secondary battery according to the present invention, it is possible to perform laminating (stacking) and folding processes of the separator and the electrode, in addition to the winding process which is a general process.

The shape of the lithium secondary battery is not particularly limited, and may be of various shapes such as a cylindrical shape, a laminate shape, or a coin shape.

Hereinafter, preferred examples are provided to help understanding of the present invention, but the following examples are only for exemplifying the present invention, and it is apparent to those skilled in the art that various changes and modifications can be made within the scope and spirit of the present invention, and such changes and modifications are within the scope of the appended claims.

### <Manufacture of lithium-sulfur battery>

### Example 1.

An Arabic gum-cysteine polymer was prepared by mixing Arabic gum (product of Daejung Chemicals & Metals Co., Ltd.) and cysteine at a weight ratio of 99: 1.

A binder composition was prepared by mixing butyl acrylatestyrene copolymer (product of LG Chem) as a binder, lithiated carboxymethyl cellulose (product of GL Chem (GBLi-1000)) as a thickener and the Arabic gum-cysteine polymer.

In addition, sulfur (product of Sigma-Aldrich) was mixed with CNT (Carbon Nanotube) in a weight ratio of 75: 25 using a ball mill, and then heat treated at 155 °C to prepare a positive electrode active material of a sulfur-carbon composite.

Denka black was prepared as a conductive material.

The sulfur-carbon composite, the conductive material, and the binder composition (a binder, a thickener, and an Arabic gum-cysteine polymer) are added to water as a solvent and mixed using a bead milling method to prepare a slurry for producing a positive electrode. At this time, the mixing ratio was set to be 90: 5: 2.5: 1.5: 1 of positive electrode active material: electrically conductive material: binder: thickener: Arabic gum-cysteine polymer in weight ratio. The prepared slurry for preparing a positive electrode was applied to an aluminum foil current collector, and then dried at 50 °C for 2 hours to prepare a positive electrode (energy density of positive electrode: 5.5mAh/cm²).

A 100 µm-thick lithium foil was used as a negative electrode, and a 20 µm-thick polyethylene film was used as a separator. An electrolyte obtained by mixing LiTFSI at a concentration of 1M in a mixed solvent (1: 1 v/v) of dioxolane (DOL) and dimethyl ether (DME) and adding LiNO₃ in an amount of 1% by weight relative to the electrolyte solution was used as the electrolyte to manufacture a lithium-sulfur battery (CR-2032 coin cell) .

### Example 2.

A lithium-sulfur battery was manufactured in the same manner as in Example 1 above, except that the weight ratio of positive electrode active material: electrically conductive material: binder: thickener: Arabic gum-cysteine polymer is set to be 86: 5: 2.5: 1.5: 5.

### Example 3.

A lithium-sulfur battery was manufactured in the same manner as in Example 1 above, except that the weight ratio of positive electrode active material: electrically conductive material: binder: thickener: Arabic gum-cysteine polymer is set to be 80: 5: 2.5: 1.5: 10.

### Example 4.

A lithium-sulfur battery was manufactured in the same manner as in Example 3 above, except that the Arabic gum-cysteine polymer is prepared by mixing Arabic gum (product of Daejung Chemicals & Metals Co., Ltd.) and cysteine in a weight ratio of 95: 5.

### Comparative Example 1.

A lithium-sulfur battery was manufactured in the same manner as in Example 1 above, except that Arabic gum-cysteine polymer is not used and the weight ratio of positive electrode active material: electrically conductive material: binder: thickener is set to be 91: 5: 2.5: 1.5.

### Comparative Example 2.

A lithium-sulfur battery was manufactured in the same manner as in Example 1, except that Arabic gum is used instead of the Arabic gum-cysteine polymer.

### Experimental Example 1. Evaluation of characteristics of lithium-sulfur battery

The initial discharging capacity and lifetime characteristics of the lithium-sulfur batteries of Examples 1 to 4 and Comparative Examples 1 to 2 were measured.

Each of the lithium-sulfur batteries was subjected to 3 times of 0.1C discharging/charging and 3 times of 0.3C discharging/charging within a voltage range of 1.8 to 2.5V, and was subjected to 0.3C charging and 0.5C discharging.

The cycle performance of the battery was evaluated by the number of cycles at the point of being 1000 mAh/gS or less.

The measurement results of initial discharging capacity and lifetime characteristics are shown in Table 1 below.

**Table 1:**

| | Content of Arabic gum-cysteine polymer | Initial discharging capacity (mAh/gS) | Number of cycle (cycle) |
|---|---|---|---|
| Example 1 | 1 % by weight (99: 1) | 1273 | 121 |
| Example 2 | 5 % by weight (99: 1) | 1277 | 98 |
| Example 3 | 10 % by weight (99: 1) | 1240 | 98 |
| Example 4 | 10 % by weight (95: 5) | 1220 | 87 |
| Comparative Example 1 | - | 1145 | 87 |
| Comparative Example 2 | Arabic gum 1 % by weight | 1085 | 75 |

From the results of Table 1, it was confirmed that the lithium-sulfur batteries of Examples 1 to 4 comprising the Arabic gum-cysteine polymer showed better initial discharging capacity than the lithium-sulfur batteries of Comparative Example 1 without the Arabic gum-cysteine polymer and Comparative Example 2 comprising the Arabic gum. In addition, Examples 1 to 3 showed better lifetime characteristics than Comparative Examples 1 and 2. Example 3 contained the Arabic gum-cysteine polymer in an amount of 10% by weight based on a total weight of 100 % by weight of base solids contained in the positive electrode active material layer, and showed lower initial discharging capacity than Examples 1 and 2. In addition, in the case of Example 4, the Arabic gum-cysteine polymer was contained in an amount of 10% by weight based on a total weight of 100 % by weight of base solids contained in the positive electrode active material layer, the Arabic gum and cysteine were polymerized in a weight ratio of 95: 5, the initial discharging capacity showed the lowest result among the Examples, and the number of cycles showed the same result as Comparative Example 1.

In the case of Comparative Example 2, only Arabic gum was included instead of the Arabic gum-cysteine polymer, and since the Arabic gum does not contain cysteine, the effect of adsorbing the lithium polysulfide by the carboxyl group and amine group of cysteine cannot be obtained, and thus both the initial discharging capacity and the number of cycles were lower than those of Examples 1 to 4 containing the Arabic gum-cysteine polymer.

From these, it was found that if the binder composition containing the Arabic gum-cysteine polymer is used and applied to the positive electrode of the lithium-sulfur battery, the reactivity of the positive electrode is increased by adsorbing lithium polysulfide, and the initial discharging capacity of the lithium-sulfur battery including it is improved. In addition, it was found that preferably, if the Arabic gum-cysteine polymer is contained in an amount of 1% by weight or more and less than 10% by weight based on a total weight of 100 % by weight of base solids contained in the positive electrode active material layer, not only the initial discharging capacity of the lithium-sulfur battery but also the lifetime characteristics can be improved.

## Claims

1. A binder composition for manufacturing a positive electrode of a lithium secondary battery comprising a binder, a thickener, and an Arabic gum-cysteine polymer.

2. The binder composition for manufacturing a positive electrode of a lithium secondary battery according to claim 1, wherein the Arabic gum-cysteine polymer comprises 95 to 99.9% by weight of the Arabic gum and 0.1 to 5% by weight of cysteine, based on the total weight of the polymer.

3. The binder composition for manufacturing a positive electrode of a lithium secondary battery according to claim 1, wherein the binder composition includes 20 to 60% by weight of the binder, 15 to 35% by weight of the thickener, and 10 to 65% by weight of the Arabic gum-cysteine polymer, based on the total weight of the composition.

4. The binder composition for manufacturing a positive electrode of a lithium secondary battery according to claim 1, wherein the thickener has a lithiated form.

5. The binder composition for manufacturing a positive electrode of a lithium secondary battery according to claim 1, wherein the binder is selected from the group consisting of poly(vinylidene fluoride) (PVDF), vinylidene fluoride-hexafluoropropylene copolymer (PVDF-co-HFP), polyvinyl alcohol, polyacrylonitrile, starch, hydroxypropyl cellulose, regenerated cellulose, polyvinyl pyrrolidone, polytetrafluoroethylene, polyethylene, polypropylene, polybutyl acrylate, polypropyl acrylate, polyethyl acrylate, polyethylhexyl acrylate, polystyrene, ethylene-propylene-diene polymer (EPDM), sulfonated-EPDM, styrene-butadiene rubber (SBR), fluorine rubber, a mixture containing two or more thereof, and a copolymer of two or more thereof.

6. The binder composition for manufacturing a positive electrode of a lithium secondary battery according to claim 1, wherein the thickener is at least one or more selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

7. A positive electrode for a lithium secondary battery comprising a current collector; and a positive electrode active material layer disposed on at least one surface of the current collector, wherein the positive electrode active material layer comprises the binder composition according to any one of claims 1 to 6, a positive electrode active material and a conductive material.

8. The positive electrode for a lithium secondary battery according to claim 7, wherein the binder composition is contained in an amount of 3 to 20% by weight, based on a total weight of 100 % by weight of base solids contained in the positive electrode active material layer.

9. The positive electrode for a lithium secondary battery according to claim 7, wherein the Arabic gum-cysteine polymer is contained in an amount of 0.5% by weight or more and less than 10% by weight, based on a total weight of 100 % by weight of base solids contained in the positive electrode active material layer.

10. The positive electrode for a lithium secondary battery according to claim 7, wherein the positive electrode active material comprises at least one selected from the group consisting of elemental sulfur (S₈), Li₂Sₙ(n ≥ 1, n is an integer), organic sulfur compound and carbon-sulfur polymer [(C₂Sₓ)ₙ, 2.5 ≤ x ≤ 50, n ≥ 2, x and n are integers] and sulfur-carbon composite.

11. A lithium secondary battery comprising the positive electrode according to any one of claims 7 to 10; a negative electrode; a separator interposed between the positive electrode and the negative electrode; and an electrolyte.

12. The lithium secondary battery according to claim 11, wherein the lithium secondary battery is a lithium-sulfur battery.
